# EUROPÄISCHE PATENTSCHRIFT

(11) **EP 3 271 268 B1**
(45) Veröffentlichungstag und Bekanntmachung des Hinweises auf die Patenterteilung: **06.10.2021**
(21) Anmeldenummer: 16710178.1
(22) Anmeldetag: 16.03.2016
(51) Int. Cl.: B65G 23/08, B65G 39/09, B65G 23/06

(54) **FÖRDERROLLE MIT DREHMOMENTÜBERTRAGUNGSABSCHNITT UND HERSTELLUNGSVERFAHREN**
CONVEYOR ROLLER HAVING A TORQUE TRANSMISSION SECTION, AND PRODUCTION METHOD
ROULEAU DE TRANSPORT COMPORTANT UNE PARTIE DE TRANSMISSION DE COUPLE ET PROCÉDÉ DE FABRICATION

(30) Priorität: 19.03.2015 DE 102015104130
(43) Veröffentlichungstag der Anmeldung: 24.01.2018
(73) Patentinhaber: Interroll Holding AG, 6592 Sant' Antonino (CH)
(72) Erfinder: TIEDEMANN, Hauke, 50765 Köln (DE)
(74) Vertreter: Kohlhof, Stephan
(86) Internationale Anmeldenummer: PCT/EP2016/055674
(87) Internationale Veröffentlichungsnummer: WO 2016/146678

(56) Entgegenhaltungen:
- WO-A1-2009/109030
- BE-A- 434 798
- DE-A1- 19 641 317
- DE-C- 601 046
- DE-U1-202009 015 912
- GB-A- 870 465
- JP-A- 2000 159 330
- JP-A- 2004 276 290
- US-A- 2 915 167
- US-A- 3 647 589
- US-A- 3 941 635
- US-A- 4 035 212
- US-A- 4 716 637
- US-B1- 6 710 505

## Beschreibung

Die Erfindung betrifft eine Förderrolle für eine reinigungsfluidbelastete, insbesondere spritz- und/oder strahlwasserbelastete Umgebung sowie ein Verfahren zum Herstellen einer solchen Förderrolle.

Förderrollen werden in einer Vielzahl von Förderanlagen eingesetzt, um Waren, Produkte, Verpackungen, Pakete oder anderes Transportgut innerhalb einer automatisierten Förderanlage zu befördern. Die Förderanlagen können in einzelne Förderabschnitte eingeteilt sein, die jeweils mehrere Förderrollen aufweisen. Je nach Anwendung wird auf die Förderrollen ein Transportband, z.B. ein Transportgurt, ein Kunststoffgliederband oder ein Modular- bzw. Modulband aufgezogen. Alternativ kann das Transportgut auch unmittelbar auf den Förderrollen aufliegen. Um das Transportgut zu transportieren, werden eine oder mehrere Förderrollen durch einen Antrieb in Rotation versetzt. Hierzu können die Förderrollen eine Antriebseinheit aufweisen, wobei eine solche Förderrolle mit Antriebseinheit auch als Förderantrieb oder Motorrolle bezeichnet werden kann. Förderrollen können beispielsweise auch durch einen Antriebsriemen, der mit einer Antriebseinheit oder einer Motorrolle verbunden ist, in Rotation versetzt werden. Förderrollen mit großen Antriebsleistungen, beispielsweise mit 400 V Versorgungsspannung oder mit Frequenzumrichter betriebene Förderrollen, werden zur besseren Ableitung der Verlustwärme mit einem Öl gefüllt. Solche oder ähnliche Förderrollen werden als Trommelmotoren bezeichnet.

Solche Förderanlagen mit Förderrollen werden auch in der lebensmittelverarbeitenden Industrie eingesetzt. Bei Herstellungsprozessen von Lebensmitteln werden hohe Ansprüche an die Hygiene innerhalb einer Produktionsanlage gestellt, die somit auch die darin eingesetzten Förderanlagen und Förderrollen betreffen. Insbesondere ist es erforderlich, dass alle Einrichtungen der Produktionsanlage leicht zu reinigen sind, um dem Wachstum von Keimen, Bakterien, Pilzen und anderen Mikroorganismen vorzubeugen und beispielsweise die Bildung von Biofilmen zu vermeiden. Zur Reinigung werden in der Regel große Mengen an Reinigungs- und Desinfektionsmitteln eingesetzt, beispielsweise in Form von wässrigen Lösungen. Hierzu werden häufig Hochdruckreiniger eingesetzt, welche eine mechanische mit einer chemischen Reinigung kombinieren. Durch diese Art der Reinigung können auch eingeschränkt zugängliche Bereiche, wie Hohlräume, Nischen oder Ecken, einer Produktionsanlage effizient gereinigt werden.

An die Komponenten in lebensmittelverarbeitenden Anlagen werden daher erhöhte Anforderungen gestellt, insbesondere hinsichtlich der Dichtigkeit und Reinigbarkeit. Dies betrifft auch Förderrollen, die in lebensmittelverarbeitenden Produktionsanlagen eingesetzt werden.

Ein Trommelmotor zum Antreiben eines Förderbands in einer hygienischen Umgebung mit Spritz- oder Strahlwasserbelastung ist beispielsweise aus der DE 20 2009 012 822 U1 und der US 2,915,167 bekannt. Durch die Ausbildung des Trommelmotormantels mit einer im Querschnitt eckigen Außenfläche in zumindest einem Drehmomentübertragungsabschnitt kann die Drehmomentübertragung verbessert werden. Ferner ist aus dem Dokument US 3,941,635 ein Verfahren zur Abdichtung des Endes einer ummantelten Rolle bekannt.

Dazu offenbart US 6,710,505 eine Förderrolle nach dem Oberbegriff des Anspruchs 1 und ein Verfahren zum Herstellen einer Förderrolle nach dem Oberbegriff des Anspruchs 11.

Während diese Lösung bereits eine gute Drehmomentübertragung und eine gute Eignung für den Einsatz im Lebensmittelbereich aufweist, besteht jedoch weiterhin Bedarf an weiter verbesserten und/oder vereinfachten Förderrollen sowie einer weiteren Reduktion des Verschmutzungsrisikos im Einsatz in der lebensmittelverarbeitenden Industrie. Förderrollen unterliegen zudem als Produkte, die in größeren Serien hergestellt werden, einem hohen Anspruch an eine kostengünstige und zugleich qualitativ hochwertige Fertigung. Es besteht daher ferner ein Bedarf, die Fertigungskosten von Förderrollen zu reduzieren, ohne hierbei deren Betriebseigenschaften, Einsatzdauer oder Wartungsintervalle zu verschlechtern. Gleichzeitig erfordern unterschiedliche Einsatzgebiete auch unterschiedliche Lösungen, so dass auch eine kostengünstige und flexible Anpassung der Förderrollen an unterschiedliche Rahmenbedingungen gefordert ist.

Es ist daher eine Aufgabe der vorliegenden Erfindung, eine verbesserte Förderrolle und ein verbessertes Herstellungsverfahren für eine Förderrolle anzugeben, die einen oder mehrere der genannten Bedarfe erfüllen. Insbesondere ist es eine Aufgabe der vorliegenden Erfindung, eine Förderrolle und ein Herstellungsverfahren anzugeben, die weniger anfällig sind für Verschmutzungen, besser zu reinigen sind und/oder kostengünstig und/oder individuell bzw. bedarfsgerecht herzustellen sind.

Gemäß dem ersten Aspekt der Erfindung wird diese Aufgabe gelöst durch eine Förderrolle für eine Spritz- und/oder Strahlwasser belastete Umgebung, umfassend einen Rollenkörper mit einem darin ausgebildeten Hohlraum, eine erste Lagerwelle und eine zweite Lagerwelle, und ein auf einer Außenoberfläche des Rollenkörpers angeordnetes Drehmomentübertragungselement, wobei das Drehmomentübertragungselement stoff- und kraftschlüssig mit der Außenoberfläche des Rollenkörpers verbunden ist; die Förderrolle umfassend eine im Hohlraum des Rollenkörpers angeordnete elektrische Antriebseinheit mit einem Stator und einem Rotor, wobei der Rotor und der Stator derart mit dem Rollenkörper und der ersten und zweiten Lagerwelle verbunden sind, dass eine Relativdrehung zwischen Rotor und Stator eine Relativdrehung zwischen dem Rollenkörper einerseits und der ersten und zweiten Lagerwelle andererseits bewirkt, wobei zwischen der Innenfläche des Drehmomentübertragungselements und der Außenoberfläche des Rollenkörpers ein Klebstoff angeordnet ist, und eine Außenfläche des Drehmomentübertragungselements mit Vorsprüngen und/oder Vertiefungen ausgebildet ist.

Der Rollenkörper einer Förderrolle hat in der Regel eine zylindrische Außenform und ist vorzugsweise als Hohlzylinder ausgebildet. Der Rollenkörper besteht vorzugsweise aus Metall, insbesondere Edelstahl. Die axialen Enden des Rollenkörpers sind vorzugsweise geschlossen, beispielsweise durch Kopfelemente oder Deckel oder - bei Rollenantrieben -durch Motorkomponenten oder eine Motorkartusche.

Aus den axialen Enden des Rollenkörpers bzw. der Förderrolle ragen die erste und zweite Lagerwelle hinaus, um die Förderrolle darüber drehbar zu lagern. Das auf der Außenoberfläche des Rollenkörpers angeordnete Drehmomentübertragungselement dient dazu, ein Drehmoment von der Förderrolle auf ein zu transportierendes Gut zu übertragen, entweder direkt (wenn das Transportgut direkt auf dem Drehmomentübertragungselement aufliegt) oder indirekt über ein auf dem Drehmomentübertragungselement angeordnetes Transportband. In letzterem Fall wird das Drehmoment des Rollenkörpers über das Drehmomentübertragungselement auf das Transportband übertragen. Dadurch wird das sich über eine Reihe von Förderrollen erstreckende Transportband in einer Förderrichtung angetrieben, um darauf befindliches Transportgut in Förderrichtung zu transportieren. Wie auch weiter unten noch beschrieben ist, können auch zwei, drei oder mehrere Drehmomentübertragungselemente auf der Außenoberfläche des Rollenkörpers angeordnet sein, vorzugsweise in gleichem Abstand voneinander.

Das Drehmomentübertragungselement ist stoff- und kraftschlüssig mit der Außenoberfläche des Rollenkörpers verbunden. Die stoffschlüssige Verbindung erfolgt durch Kleben. Die kraftschlüssige Verbindung erfolgt vorzugsweise durch Aufschrumpfen. Dazu weist das Drehmomentübertragungselement vorzugsweise in einem noch nicht auf den Rollenkörper montierten Zustand einen Innendurchmesser auf, der kleiner ist als der Außendurchmesser des Rollenkörpers. Durch Aufweitung des Innendurchmessers des Drehmomentübertragungselements, beispielsweise durch Erwärmen, kann das Drehmomentübertragungselement auf dem Rollenkörper montiert werden und anschließend, beispielsweise durch Abkühlen, auf den Rollenkörper aufschrumpfen. Die Kombination einer stoff- und kraftschlüssigen Verbindung durch Kleben und Aufschrumpfen kann auch als Schrumpf-Klebe-Verbindung bezeichnet werden.

Das Aufweiten des Innendurchmessers des Drehmomentübertragungselements kann beispielsweise durch ein Aufschieben und/oder Aufspannen im Rahmen der Elastizität des Materials des Drehmomentübertragungselements erfolgen und/oder durch eine Temperaturbehandlung, insbesondere eine Erwärmung, beispielsweise in einem Ofen, und/oder durch eine Bestrahlung mit kurzwelligen elektromagnetischen Wellen.

Durch die stoff- und kraftschlüssige Verbindung des Drehmomentübertragungselements mit der Außenoberfläche des Rollenkörpers wird eine Förderrolle geschaffen, die einerseits besonders leicht zu reinigen ist und andererseits weniger anfällig für Verschmutzungen ist. Die stoff- und kraftschlüssige Verbindung zwischen Drehmomentübertragungselement und Außenoberfläche des Rollenkörpers verhindert, dass sich in einem Spalt zwischen der Außenoberfläche des Rollenkörpers und dem Drehmomentübertragungselement Verschmutzungen absetzen und/oder Keime bilden können. Ferner ist die stoff- und kraftschlüssige Verbindung besonders dicht und daher insbesondere für eine Hochdruckreinigung im Lebensmittelbereich geeignet.

Ferner erlaubt die erfindungsgemäße Förderrolle eine einfache und kostengünstige und dabei gleichzeitig bedarfsgerechte Herstellung. Für die erfindungsgemäße Förderrolle können beispielsweise standardisierte, zylindrische Rollenkörper verwendet werden. Eine Anpassung auf die unterschiedlichen, durch verschiedene Drehmomentübertragungselemente anzutreibenden Transportbänder kann dadurch erfolgen, dass entsprechende Drehmomentübertragungselemente gewählt werden, die stoff- und kraftschlüssig mit der Außenoberfläche des Rollenkörpers verbunden werden.

Die Außenfläche des Drehmomentübertragungselements ist mit Vorsprüngen und/oder Vertiefungen ausgebildet. Das Drehmomentübertragungselement ist vorzugsweise im Wesentlichen ringförmig ausgebildet, wobei vorzugsweise eine Innenfläche des Drehmomentübertragungselements einen kreisförmigen Querschnitt aufweist und/oder eine Außenfläche des Drehmomentübertragungselements im Querschnitt kreisförmig, polygonal, gezahnt und/oder mit regelmäßig entlang des Umfangs beabstandeten, in einem wiederkehrenden Muster angeordneten Vorsprüngen und/oder Vertiefungen ausgebildet ist.

Vorzugsweise ist das Drehmomentübertragungselement ein Rohr oder eine Scheibe mit einer axialen Erstreckung. Das Drehmomentübertragungselement ist an seiner Innenfläche vorzugsweise zylindrisch ausgebildet und an seiner Außenfläche so geformt, dass - vorzugsweise durch einen Formschluss - das Drehmoment an ein Transportband übertragen werden kann. Durch Verwendung von an ihrer Außenoberfläche unterschiedlich geformten Rohren bzw. Scheiben kann die Förderrolle somit leicht an verschiedene Einsatzbereiche angepasst werden.

Das Drehmomentübertragungselement kann sich beispielsweise über die gesamte Länge des Rollenkörpers oder einen Großteil davon erstrecken. Alternativ kann das Drehmomentübertragungselement eine axiale Erstreckung aufweisen, die lediglich einem Bruchteil der axialen Erstreckung des Rollenkörpers entspricht. In letzterem Falle sind vorzugsweise mehrere, vorzugsweise äquidistant angeordnete, Drehmomentübertragungselemente vorgesehen.

Die Förderrolle umfasst eine im Hohlraum des Rollenkörpers angeordnete elektrische Antriebseinheit mit einem Stator und einem Rotor, wobei der Rotor und der Stator derart mit dem Rollenkörper und der ersten und zweiten Lagerwelle verbunden sind, dass eine Relativdrehung zwischen Rotor und Stator eine Relativdrehung zwischen dem Rollenkörper einerseits und der ersten und zweiten Lagerwelle andererseits bewirkt.

In dieser Ausführungsform ist die Förderrolle als Förderantrieb oder Motorrolle ausgebildet. Insbesondere bei solchen Förderantrieben bzw. Motorrollen ist die stoff- und kraftschlüssige Verbindung von Drehmomentübertragungselement und Außenoberfläche des Rollenkörpers vorteilhaft.

Vorzugsweise ist die elektrische Antriebseinheit als Motorkartusche ausgebildet. Dabei sind die Komponenten der elektrischen Antriebseinheit vorzugsweise in einem im Wesentlichen geschlossenen Gehäuse angeordnet, welches vorzugsweise eine zylindrische Außenoberfläche aufweist. Der Außendurchmesser einer Motorkartusche ist vorzugsweise so auf den Innendurchmesser des Rollenkörpers angepasst, dass eine Montage der Motorkartusche im Rollenkörper möglich ist. Motorkartuschen haben den Vorteil, dass sie in besonders einfacher Weise in einem Rollenkörper montiert werden können und auf diese Weise eine Förderrolle durch einen schnellen und kostengünstigen Montageschritt zu einem Förderantrieb bzw. einer Motorrolle ausgebildet werden kann.

Es ist vorgesehen, dass zwischen der Innenfläche des Drehmomentübertragungselements und der Außenoberfläche des Rollenkörpers ein Klebstoff angeordnet ist. Der Klebstoff kann während der Montage vorzugsweise auf die Innenfläche des Drehmomentübertragungselements und/oder die Außenoberfläche des Rollenkörpers aufgebracht werden.

In einer weiteren bevorzugten Ausführungsform der Förderrolle ist vorgesehen, dass
- das Drehmomentübertragungselement in axialer Richtung über mindestens ein Ende des Rollenkörpers hinaus steht, und/oder
- das Drehmomentübertragungselement in axialer Richtung mit mindestens einem Ende des Rollenkörpers bündig abschließt, und/oder
- mindestens ein Ende des Rollenkörpers in axialer Richtung über das Drehmomentübertragungselement hinaus steht.

Alternativ oder zusätzlich ist vorzugsweise vorgesehen, dass
- die Motorkartusche in axialer Richtung über mindestens ein Ende des Rollenkörpers hinaus steht, und/oder
- die Motorkartusche in axialer Richtung mit mindestens einem Ende des Rollenkörpers bündig abschließt, und/oder
- mindestens ein Ende des Rollenkörpers in axialer Richtung über die Motorkartusche hinaus steht.

Diese Ausführungsformen sehen vor, dass an den axialen Enden der Förderrolle der Rollenkörper, das Drehmomentübertragungselement und gegebenenfalls eine Motorkartusche bündig abschließen oder das Drehmomentübertragungselement und/oder die Motorkartusche in axialer Richtung über den Rollenkörper hinaus stehen oder in axialer Richtung gegenüber dem Rollenkörper zurückversetzt sind. Durch diese verschiedenen Möglichkeiten ergeben sich verschiedene Ausgestaltungen der axialen Enden der Förderrolle, die insbesondere auch zu verschiedenen Ausgestaltungen der im Folgenden beschriebenen axialen Stirnkappen führen.

Vorzugsweise werden auch die gemäß dem ersten Aspekt beschriebene Förderrolle und ihre möglichen Fortbildungen ferner dadurch fortgebildet, dass eine axiale Stirnkappe der Förderrolle durch eine ausgehärtete Vergussmasse gebildet ist, die stoffschlüssig mit dem Rollenkörper und dem Drehmomentübertragungselement und/oder der Motorkartusche und/der einem am axialen Ende des Rollenkörpers angeordneten Kopfelement verbunden ist.

Die Ausbildung einer axialen Stirnkappe an einem Ende, vorzugsweise an beiden axialen Enden, der Förderrolle hat den Vorteil, dass auch minimale Spalte zwischen dem Rollenkörper und einem oder mehreren der folgenden Elemente, nämlich dem Drehmomentübertragungselement und/oder der Motorkartusche und/oder einem Kopfelement, geschlossen werden und damit die Anfälligkeit für Verschmutzungen verringert und die Reinigbarkeit verbessert wird. Die durch die axiale Stirnkappe hindurchragende Lagerwelle bleibt dabei gegenüber der Stirnkappe drehbar.

Ferner können Materialunterschiede und/oder axiale Längenunterschiede an den axialen Enden der Förderrolle ausgeglichen werden, was ebenfalls zur Verringerung der Verschmutzungsanfälligkeit und zur Verbesserung der Reinigbarkeit beiträgt. Insbesondere bei aus Metall ausgebildeten Bauteilen kann auf diese Weise auch eine Spaltkorrosion vermieden oder verringert werden.

Die axiale Stirnkappe wird vorzugsweise durch Ausgießen mit einer fließfähigen oder flüssigen Vergussmasse gebildet, die anschließend aushärtet. Eine möglicherweise entstehende radiale Außenkante am axialen Ende der Stirnkappe kann angefast sein.

Als Schalung für die Herstellung der axialen Stirnkappe durch Vergießen mit einer Vergussmasse kann beispielsweise eine Schalung an der Außenoberfläche des Drehmomentübertragungselements und/oder des Rollenkörpers angeordnet werden, die vorzugsweise aus Silikon bestehen oder Silikon aufweisen kann. Bei Ausgestaltungen, bei denen das Drehmomentübertragungselement in axialer Richtung über das Ende des Rollenkörpers hinaussteht und/oder die Motorkartusche in axialer Richtung gegenüber dem Ende des Rollenkörpers zurückversetzt ist, können auch die Innenfläche des Drehmomentübertragungselements und/oder die Innenfläche des Rollenkörpers bzw. insbesondere ein ringförmiger Abschnitt davon, als verlorene Schalung bzw. Schwundschalung dienen, indem die sich in axialer Richtung am Ende der Förderrolle ergebenden Vertiefungen durch die Vergussmasse ausgegossen werden. Gegenüber der Variante mit einer separaten Schalung hat dies den Vorteil, dass die Schritte zum Anordnen und Entfernen der Schalung entfallen können.

In einer weiteren Ausgestaltung ist bevorzugt, dass die Stirnkappe am Übergang zur Lagerwelle eine axial nach außen gerichtete Wölbung aufweist.

Eine solche Ausgestaltung der Stirnkappe ergibt sich vorzugsweise dadurch, dass die Vergussmasse derart beschaffen ist, dass sie im fließfähigen bzw. flüssigen Zustand einen hydrostatischen Meniskus zur Lagerwelle hin ausbildet. Die Lagerwelle wird vorzugsweise vordem Vergießen mit einem Trennmittel versehen.

Die axial nach außen gerichtete Wölbung bildet eine Abweiserlippe an der Lagerwelle, welche einerseits die Drehbarkeit der Förderrolle gegenüber der Lagerwelle ermöglicht und andererseits eine sehr gute Abdichtung zwischen der Stirnkappe und der Lagerwelle im Sinne einer Nullspaltabdichtung ermöglicht.

In einer weiteren bevorzugten Ausführungsform ist das Drehmomentübertragungselement zweiteilig ausgebildet, wobei vorzugsweise eine Schnittstelle zwischen einem ersten und einem zweiten Teil des Drehmomentübertragungselements in Umfangsrichtung verläuft. Ferner ist bevorzugt, dass die beiden Teile des Drehmomentübertragungselements form-, stoff- und/oder kraftschlüssig miteinander verbunden sind.

Durch eine zweiteilige Ausbildung des Drehmomentübertragungselements kann die bedarfsgerechte Anpassbarkeit des Drehmomentübertragungselements an beispielsweise verschiedene Transportbänder weiter vereinfacht werden. Die in Umfangsrichtung verlaufende Schnittstelle kann beispielsweise polygonal, insbesondere hexagonal ausgebildet sein. Eine solche polygonale Ausbildung der Schnittstelle ermöglicht insbesondere eine formschlüssige Verbindung der beiden Teile des Drehmomentübertragungselements. Alternativ oder zusätzlich können die beiden Teile des Drehmomentübertragungselements auch stoff- und/oder kraftschlüssig miteinander verbunden sein. Eine stoffschlüssige Verbindung kann beispielsweise durch Kleben erfolgen, eine kraftschlüssige Verbindung beispielsweise durch Aufschrumpfen. Insbesondere kann die Verbindung zwischen den beiden Teilen des Drehmomentübertragungselements die gleiche Art von Verbindung sein, die zwischen dem ersten Teil des Drehmomentübertragungselements und der Außenoberfläche des Rollenkörpers besteht.

Ferner ist insbesondere bevorzugt, dass das Drehmomentübertragungselement aus Kunststoff ausgebildet ist oder Kunststoff aufweist. Der Kunststoff ist vorzugsweise ein lebensmittelechter Kunststoff und/oder weist Zusätze auf, welche eine Ansiedlung von Mikroorganismen verringern und/oder verhindern, wie beispielsweise antiseptische und/oder fungizide Zusätze und/oder Silberpartikel. Vorzugsweise ist der Kunststoff Polyurethan oder weist Polyurethan auf.

Ferner ist bevorzugt, dass das Drehmomentübertragungselement, die Vergussmasse und/oder der Klebstoff aus dem gleichen Material ausgebildet sind oder das gleiche Material aufweisen. Das Material ist vorzugsweise ein Kunststoff, insbesondere ein lebensmittelechter Kunststoff, insbesondere Polyurethan. Wie zuvor beschrieben, kann das Material Zusätze aufweisen, die eine Ansiedlung von Mikroorganismen verringern und/oder verhindern.

Das Material ist vorzugsweise insbesondere geeignet, in einem ausgehärteten Zustand beispielsweise als Drehmomentübertragungselement eingesetzt zu werden und in einem flüssigen, fließfähigen und/oder streichfähigen Zustand als Vergussmasse und/oder Klebstoff eingesetzt zu werden. Insbesondere Polyurethan eignet sich als ein solches Material. Der Vorteil der Ausbildung von Drehmomentübertragungselement, Vergussmasse und Klebstoff aus dem gleichen Material hat den Vorteil, dass eine stoffschlüssige, einstückige Verbindung aus dem gleichen Material entsteht, welche die genannten Vorteile in besonders deutlicher Form verwirklicht.

Vorzugsweise sind auch die beiden Teile des Drehmomentübertragungselements aus dem gleichen Material ausgebildet.

Besonders bevorzugt kann beispielsweise eine Ausgestaltung der Förderrolle sein, bei der das Drehmomentübertragungselement eine axiale Länge aufweist, die mindestens der axialen Länge des Rollenkörpers entspricht, und das Drehmomentübertragungselement aus Polyurethan besteht und mittels Polyurethan auf dem Rollenkörper verklebt wurde, wobei die axialen Stirnkappen ebenfalls aus Polyurethan als Vergussmasse bestehen und stoffschlüssig mit dem Drehmomentübertragungselement verbunden sind. Auf diese Weise entsteht eine Förderrolle, bei der bis auf die beiden Lagerwellen sämtliche äußeren Flächen einstückig aus Polyurethan ausgebildet sind.

Eine alternative besonders bevorzugte Ausführungsform einer Förderrolle ergibt sich, wenn eine als Förderantrieb ausgebildete Förderrolle mit einem Edelstahlrollenkörper und einer darin angeordneten Motorkartusche axiale Stirnkappen aufweist, welche an den axialen Enden des Rollenkörpers den Innendurchmesser des Rollenkörpers vollständig - bis auf die Lagerwellen - verschließen. Auf diese Weise entsteht eine Motorrolle, welche einen zylindrischen Edelstahlrollenkörper und mit diesem stoffschlüssig verbundene, vorzugsweise aus Polyurethan bestehende Stirnkappen aufweist, die durch die Abweiserlippe an den Lagerwellen besonders gut gegen Verschmutzungen geschützt und besonders gut zu reinigen ist und sich daher besonders gut für die Anwendung im Lebensmittelbereich eignet.

Gemäß dem zweiten Aspekt der Erfindung wird die eingangs genannte Aufgabe gelöst durch ein Verfahren zum Herstellen einer Förderrolle für eine Spritz- oder Strahlwasser belastete Umgebung, insbesondere einer Förderrolle nach erstem Aspekt der Erfindung, umfassend
- Bereitstellen eines Rollenkörpers mit einem darin ausgebildeten Hohlraum und einer ersten und zweiten Lagerwelle,
- Stoff- und kraftschlüssiges Verbinden eines Drehmomentübertragungselements mit einer Außenoberfläche des Rollenkörpers, vorzugsweise durch
   ∘ Bereitstellen eines Drehmomentübertragungselements mit einem Innendurchmesser, der kleiner ist als ein Außendurchmesser des Rollenkörpers;
   ∘ Aufweiten des Drehmomentübertragungselements, beispielsweise durch Erwärmen;
   ∘ Aufbringen eines Klebstoffes auf eine Innenfläche des Drehmomentübertragungselements und/oder die Außenoberfläche des Rollenkörpers;
   ∘ Positionieren des Drehmomentübertragungselements auf dem Rollenkörper;
   ∘ Schrumpfen des Drehmomentübertagungselementes, beispielsweise durch Abkühlen,
   wobei im Hohlraum des Rollenkörpers eine elektrische Antriebseinheit mit einem Stator und einem Rotor angeordnet ist, wobei der Rotor und der Stator derart mit dem Rollenkörper und der ersten und zweiten Lagerwelle verbunden sind, dass eine Relativdrehung zwischen Rotor und Stator eine Relativdrehung zwischen dem Rollenkörper einerseits und der ersten und zweiten Lagerwelle andererseits bewirkt, und- zwischen einer Innenfläche des Drehmomentübertragungselements und der Außenoberfläche des Rollenkörpers ein Klebstoff angeordnet ist, und eine Außenfläche des Drehmomentübertragungselements mit Vorsprüngen und/oder Vertiefungen ausgebildet ist.

Das Verfahren kann vorzugsweise fortgebildet werden durch Bilden einer axialen Stirnkappe der Förderrolle durch Aufbringen und Aushärten einer Vergussmasse, die den Rollenkörper und das Drehmomentübertragungselement und/oder die Motorkartusche und/der ein am axialen Ende des Rollenkörpers angeordnetes Kopfelement kontaktiert.

Ferner kann das Verfahren vorzugsweise dadurch fortgebildet werden, dass vor dem Aufbringen der Vergussmasse eine Schalung auf die Außenoberfläche des Rollenkörpers und/oder eine Außenfläche des Drehmomentübertragungselements aufgebracht wird, die nach einem Aushärten der Vergussmasse wieder abgenommen wird.

Das erfindungsgemäße Verfahren und seine möglichen Fortbildungen weisen Merkmale bzw. Verfahrensschritte auf, die sie insbesondere für die Herstellung einer zuvor beschriebenen Förderrolle und ihrer Fortbildungen geeignet machen.

Zu den Vorteilen, Ausführungsvarianten und Ausführungsdetails des Verfahrens und seiner möglichen Fortbildungen wird auf die vorangegangene Beschreibung zu der Förderrolle und ihren Fortbildungen verwiesen.

Bevorzugte Ausführungsformen der Erfindung werden beispielhaft anhand der beiliegenden Figuren beschrieben. Es zeigen:
- Fig. 1:: eine dreidimensionale geschnittene Darstellung einer ersten Ausführungsform einer erfindungsgemäßen Förderrolle;
- Fig. 2:: eine Schnittdarstellung einer zweiten Ausführungsform einer erfindungsgemäßen Förderrolle;
- Fig. 3:: eine Schnittdarstellung einer dritten Ausführungsform einer erfindungsgemäßen Förderrolle; und
- Fig. 4:: eine Schnittdarstellung einer vierten Ausführungsform einer erfindungsgemäßen Förderrolle.

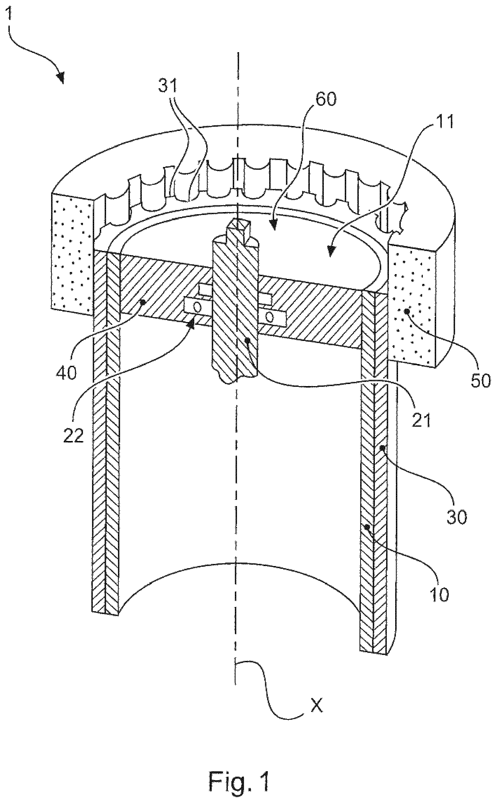

Die Figuren 1 bis 4 zeigen beispielhafte Ausführungsformen erfindungsgemäßer Förderrollen.

Die Förderrollen 1, 101, 201, 301 weisen alle einen im Wesentlichen hohlzylindrischen, vorzugsweise aus Edelstahl ausgebildeten, Rollenkörper 10, 110, 210, 310 auf mit einem axialen Ende 11, 111, 211, 311. Das gegenüberliegende, zweite axiale Ende der Förderrollen bzw. Rollenkörper ist in den Figuren nicht dargestellt, sondern lediglich der an das erste axiale Ende 11, 111, 211, 311 angrenzende Teil der Förderrollen 1, 101, 201, 301.

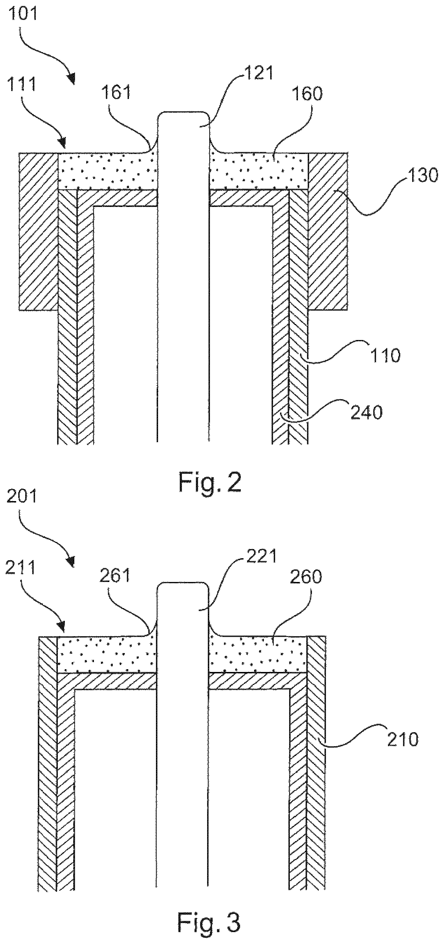

Ferner ist in allen vier Figuren eine erste Lagerwelle 21, 121, 221, 321 zu erkennen, welche aus dem axialen Ende 11, 111, 211, 311 herausragt und dazu dient, die Förderrolle zu lagern. Eine am zweiten axialen Ende der Förderrolle bzw. des Rollenkörpers angeordnete zweite Lagerwelle ist ebenso wie das zweite axiale Ende nicht dargestellt. In Fig. 1 ist ferner eine Lagerung 22 der Lagerwelle 21 zu erkennen, welche der Einfachheit halber in den Figuren 2 bis 4 nicht gezeigt, jedoch auch in diesen Konstruktionen vorzugsweise vorhanden ist.

Das axiale Ende 11, 111, 211, 311 des Rollenkörpers 10, 110, 210, 310 ist in allen dargestellten Ausführungsformen verschlossen. In Fig. 1 ist hierzu ein Deckel oder Kopfelement 40 in das axiale Ende 11 der Förderrolle 1 bzw. des Rollenkörpers 10 eingesetzt. In den Figuren 2 bis 4 ist in dem Hohlraum des Rollenkörpers 110, 210, 310 eine als Motorkartusche 140, 240, 340 ausgebildete elektrische Antriebseinheit angeordnet, in der Motorkomponenten (nicht dargestellt) angeordnet sind.

In den Figuren 1, 2 und 4 weisen die Förderrollen 1, 101, 301 ferner Drehmomentübertragungselemente 30, 130, 330 auf.

In der Förderrolle 1 gemäß Fig. 1 weist das Drehmomentübertragungselement 30 eine axiale Erstreckung in Richtung der Längsachse X auf, welche geringfügig größer ist als die axiale Erstreckung des Rollenkörpers 10, sodass das axiale Ende des Drehmomentübertragungselements 30 über das axiale Ende 11 des Rollenkörpers 10 hinaussteht. Die gesamte Außenoberfläche des Rollenkörpers 10 ist somit durch das Drehmomentübertragungselement 30 bedeckt.

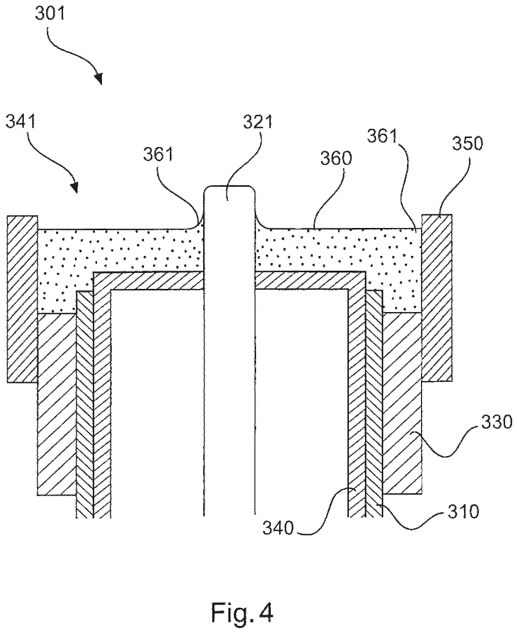

In den Figuren 2 und 4 weisen die Förderrollen 101, 301 Drehmomentübertragungselemente 130, 330 auf, welche eine axiale Erstreckung aufweisen, die kürzer ist als die axiale Erstreckung der Rollenkörper 110, 310.

Die Drehmomentübertragungselemente 30, 130, 330 weisen vorzugsweise in einem noch nicht auf die Rollenkörper 10, 110, 310 montierten Zustand einen Innendurchmesser auf, der kleiner ist als der Außendurchmesser der Förderrollen 10, 110, 310. Die Drehmomentübertragungselemente 30, 130, 330 sind vorzugsweise durch Aufweiten, beispielsweise durch Erwärmen, anschließendes Aufbringen bzw. Aufschieben auf die Rollenkörper 10, 110, 310 und anschließendes Aufschrumpfen, beispielsweise durch Abkühlen, mit der Außenoberfläche der Rollenkörper 10, 110, 310 verbunden. Neben dieser kraftschlüssigen Verbindung durch Aufschrumpfen sind die Drehmomentübertragungselemente 30, 130, 330 ferner stoffschlüssig mit der Außenoberfläche der Rollenkörper 10, 110, 310 verbunden. Erfindungsgemäß ist ein Klebstoff zwischen einer Innenfläche des Drehmomentübertragungselements und der Außenoberfläche des Rollenkörpers angeordnet. Vorzugsweise wird der Klebstoff auf die Innenfläche der Drehmomentübertragungselemente 30, 130, 330 und/oder auf die Außenoberfläche der Rollenkörper 10, 110, 310 (bzw. Abschnitte davon) aufgebracht.

Diese stoff- und kraftschlüssige Verbindung zwischen Drehmomentübertragungselementen 30, 130, 330 und Außenoberfläche des Rollenkörpers 10, 110, 310 stellt eine dichte und für Verschmutzung wenig anfällige Verbindung dar, die gleichzeitig eine einfache und kostengünstige Montage erlaubt und ferner eine einfache Anpassung an verschiedene Bedarfe hinsichtlich der Außenflächen der Drehmomentübertragungselemente erlaubt.

Die Drehmomentübertragungselemente 30, 130, 330 sind vorzugsweise aus Kunststoff ausgebildet oder weisen Kunststoff auf, vorzugsweise lebensmittelechten Kunststoff, insbesondere Polyurethan.

Das in Fig. 1 gezeigt Drehmomentübertragungselement 30 kann beispielsweise als Polyurethan-Rohr mit im Wesentlichen zylindrischer Innenfläche und einer durch Vertiefungen und Vorsprünge 31 versehenen Außenfläche ausgebildet sein. Diese Vertiefungen und Vorsprünge 31 an der Außenfläche des Drehmomentübertragungselements 30 dienen dazu, eine formschlüssige Verbindung mit einem Transportband herzustellen und so die Drehbewegung der Förderrolle in eine Förderbewegung in Förderrichtung des Transportbandes umzusetzen.

Auch die Drehmomentübertragungselemente 130, 330 der in den Figuren 2 und 4 dargestellten Förderrollen 101, 301 weisen vorzugsweise eine solche oder ähnliche Ausgestaltung der Außenfläche auf. Vorzugsweise sind die Drehmomentübertragungselemente 130, 330 als Scheiben von Kunststoffrohren mit im Wesentlichen zylindrischer Innenfläche und einer für einen Formschluss geeigneten Außenfläche ausgebildet.

In den Figuren 2 bis 4 weisen die Förderrollen 101, 201, 301 ferner eine axiale Stirnkappe 160, 260, 360 auf. Auch für die in Fig. 1 dargestellte Förderrolle 1 ist eine solche axiale Stirnkappe in dem mit 60 bezeichneten Bereich vorgesehen, in Fig. 1 aber noch nicht hergestellt. Die axialen Stirnkappen 160, 260, 360 der in den Figuren 2 bis 4 dargestellten Förderrollen 101, 201, 301 sind durch eine ausgehärtete Vergussmasse gebildet, die stoffschlüssig mit den Förderrollen 110, 210, 310 und den Motorkartuschen 140, 240, 340 verbunden ist. In den Figuren 2 und 4 sind die axialen Stirnkappen 160, 360 ferner mit den Drehmomentübertragungselementen 130, 330 stoffschlüssig verbunden.

In den Ausgestaltungen der Förderrollen 101, 201 gemäß der Figuren 2 und 3 können die axialen Stirnkappen 160, 260 einfach durch Vergießen der sich an den axialen Enden 111, 211 ergebenden Vertiefungen hergestellt werden, da in der in Fig. 2 gezeigten Ausführungsform das Drehmomentübertragungselement 130 gegenüber der Förderrolle 110 und der Motorkartusche 140 in axialer Richtung hervorsteht bzw. in der in Fig. 3 gezeigten Ausführungsform die Förderrolle 210 gegenüber der Motorkartusche 240 hervorsteht. Die zunächst fließfähige oder flüssige Vergussmasse kann in die Vertiefungen eingegossen werden, wobei in der Darstellung gemäß Fig. 2 das Drehmomentübertragungselement 130 und in der Ausführungsform gemäß der Darstellung der Fig. 3 die Förderrolle 210 als Schalung für die Vergussmasse dienen und daher auch als Schwundschalung oder verlorene Schalung bezeichnet werden können.

In den Figuren 1 und 4 ist eine separate Schaltung 50, 350 vorgesehen, die - wie in Fig. 1 gezeigt - vor dem Einbringen der Vergussmasse auf die Außenoberfläche des Drehmomentübertragungselements 30 (oder, falls ein solches nicht vorhanden ist, auf die Außenoberfläche des Rollenkörpers) aufgebracht wird und dort während und nach dem Einbringen der Vergussmasse so lange verbleibt, bis die Vergussmasse ausgehärtet ist. Anschließend kann die Schalung 50, 350 wieder entfernt werden. Die dabei entstehende radial äußere Kante 361 der axialen Stirnkappe 360 kann vorzugsweise angefast werden.

Das Vorsehen einer axialen Endkappe 160, 260, 360 aus ausgehärteter Vergussmasse hat den Vorteil, dass die dadurch entstehende stoffschlüssige Verbindung auch kleinste Spalte zuverlässig abgedichtet werden und Absätze, Stufen oder Vorsprünge am axialen Ende 11, 111, 211, 311 der Förderrolle 1, 101, 201, 301 durch eine im Wesentlichen ebene Fläche abgedeckt werden können. Auf diese Weise wird die Reinigbarkeit erleichtert und die Anfälligkeit für Verschmutzungen reduziert.

Beim Herstellen der axialen Stirnkappen 160, 260, 360 werden vorzugsweise die Lagerwellen 21, 121, 221, 321 mit einem Trennmittel versehen. Das Material der Vergussmasse ist vorzugsweise so ausgebildet, dass sich beim Vergießen an den Lagerwellen 121, 221, 321 ein hydrostatischer Meniskus bildet, der im ausgehärteten Zustand der Stirnkappe 160, 260, 360 am Übergang zur Lagerwelle 121, 221, 321 eine axial nach außen gerichtete Wölbung 161, 261, 361 bildet, die als Abweiserlippe fungiert und einen besonders kleinen Spalt zur Lagerwelle 121, 221, 321 hin bildet, um somit die gegenüber der Förderrolle 101, 201, 301 drehbare Lagerwelle 121, 221, 321 im Sinne einer Nullspaltabdichtung abzudichten.

Vorzugsweise kommt als Vergussmasse das gleiche Material zum Einsatz wie bei der stoffschlüssigen Verbindung zwischen den Drehmomentübertragungselementen 30, 130, 330 mit der Außenoberfläche der Förderrollen 10, 110, 310. Ferner vorzugsweise ist die ausgehärtete Vergussmasse das gleiche Material wie das Material, aus dem die Drehmomentübertragungselemente 30, 130, 330 hergestellt sind. Insbesondere ist es bevorzugt, dass als Material für den Klebstoff, die Drehmomentübertragungselemente 30, 130, 330 und die axialen Stirnkappen 160, 260, 360 Polyurethan zum Einsatz kommt. Dieses kann als flüssiges, fließfähiges und/oder streichfähiges Polyurethan als Vergussmasse oder Klebstoff eingesetzt werden und kann in besonders bevorzugter Weise eine stoffschlüssige Verbindung mit den Drehmomentübertragungselementen 30, 130, 330 eingehen, die ebenfalls aus Polyurethan bestehen.

Das Vergießen der axialen Enden 11, 111, 211, 311 der Förderrollen 1, 101, 201, 301 hat den Vorteil, dass auf diese Weise verschiedene Spalten und Stufen abgedichtet bzw. ausgeglichen werden können und somit besonders leicht zu reinigende und wenig verschmutzungsanfällige Förderrollen hergestellt werden können, die insbesondere für den Einsatz in der Lebensmittelindustrie geeignet sind.

## Patentansprüche

1. Förderrolle (1, 101, 201, 301) für eine Reinigungsfluid, wie beispielsweise Spritz- und/oder Strahlwasser, belastete Umgebung, umfassend
- einen Rollenkörper (10, 110, 210, 310) mit einem darin ausgebildeten Hohlraum,
- eine erste Lagerwelle (21, 121, 221, 321) und eine zweite Lagerwelle,
- ein auf einer Außenoberfläche des Rollenkörpers angeordnetes Drehmomentübertragungselement (30, 130, 330),
- wobei das Drehmomentübertragungselement stoff- und kraftschlüssig mit der Außenoberfläche des Rollenkörpers verbunden ist;
die Förderrolle umfassend eine im Hohlraum des Rollenkörpers (10, 110, 210, 310) angeordnete elektrische Antriebseinheit mit einem Stator und einem Rotor, wobei der Rotor und der Stator derart mit dem Rollenkörper und der ersten und zweiten Lagerwelle verbunden sind, dass eine Relativdrehung zwischen Rotor und Stator eine Relativdrehung zwischen dem Rollenkörper einerseits und der ersten und zweiten Lagerwelle andererseits bewirkt, wobei zwischen einer Innenfläche des Drehmomentübertragungselements (30, 130, 330) und der Außenoberfläche des Rollenkörpers (10, 110, 210, 310) ein Klebstoff angeordnet ist, **dadurch gekennzeichnet, dass** eine Außenfläche des Drehmomentübertragungselements mit Vorsprüngen und/oder Vertiefungen ausgebildet ist.

2. Förderrolle (1, 101, 201, 301) nach dem vorherigen Anspruch,
**dadurch gekennzeichnet, dass** die elektrische Antriebseinheit als Motorkartusche (140, 240, 340) ausgebildet ist.

3. Förderrolle (1, 101, 201, 301) nach mindestens einem der vorherigen Ansprüche,
**dadurch gekennzeichnet, dass**
- das Drehmomentübertragungselement (30, 130, 330) in axialer Richtung über mindestens ein Ende (11, 111, 211, 311) des Rollenkörpers (10, 110, 210, 310) hinaus steht, und/oder
- das Drehmomentübertragungselement in axialer Richtung mit mindestens einem Ende des Rollenkörpers bündig abschließt, und/oder
- mindestens ein Ende des Rollenkörpers in axialer Richtung über das Drehmomentübertragungselement hinaus steht.

4. Förderrolle (1, 101, 201, 301) nach Anspruch 2, insbesondere nach Anspruch 3,
**dadurch gekennzeichnet, dass**
- die Motorkartusche (140, 240, 340) in axialer Richtung über mindestens ein Ende (11, 111, 211, 311)des Rollenkörpers (10, 110, 210, 310) hinaus steht, und/oder
- die Motorkartusche in axialer Richtung mit mindestens einem Ende des Rollenkörpers bündig abschließt, und/oder
- mindestens ein Ende des Rollenkörpers in axialer Richtung über die Motorkartusche hinaus steht.

5. Förderrolle (1, 101, 201, 301) nach mindestens einem der vorherigen Ansprüche, **dadurch gekennzeichnet, dass** eine axiale Stirnkappe (160, 260, 360) der Förderrolle durch eine ausgehärtete Vergussmasse gebildet ist, die stoffschlüssig mit dem Rollenkörper (10, 110, 210, 310) und dem Drehmomentübertragungselement (30, 130, 330) und/oder der Motorkartusche (140, 240, 340) und/der einem am axialen Ende des Rollenkörpers angeordneten Kopfelement verbunden ist.

6. Förderrolle (1, 101, 201, 301) nach dem vorherigen Anspruch,
**dadurch gekennzeichnet, dass** die Stirnkappe (160, 260, 360) am Übergang zur Lagerwelle (21, 121, 221, 321) eine axial nach außen gerichtete Wölbung (161, 261, 361) aufweist.

7. Förderrolle (1, 101, 201, 301) nach mindestens einem der vorherigen Ansprüche, **dadurch gekennzeichnet, dass** das Drehmomentübertragungselement (30, 130, 330) zweiteilig ausgebildet ist, wobei vorzugsweise eine Schnittstelle zwischen einem ersten und einem zweiten Teil des Drehmomentübertragungselements in Umfangsrichtung verläuft.

8. Förderrolle (1, 101, 201, 301) nach dem vorherigen Anspruch,
**dadurch gekennzeichnet, dass** die beiden Teile des Drehmomentübertragungselements (30, 130, 330) form-, stoff- und/oder kraftschlüssig miteinander verbunden sind.

9. Förderrolle (1, 101, 201, 301) nach mindestens einem der vorhergehenden Ansprüche,
**dadurch gekennzeichnet, dass** das Drehmomentübertragungselement (30, 130, 330) aus Kunststoff ausgebildet ist oder Kunststoff aufweist.

10. Förderrolle (1, 101, 201, 301) nach mindestens einem der vorhergehenden Ansprüche,
**dadurch gekennzeichnet, dass** das Drehmomentübertragungselement (30, 130, 330), die Vergussmasse und/oder der Klebstoff ,aus dem gleichen Material ausgebildet sind oder das gleiche Material aufweisen.

11. Verfahren zum Herstellen einer Förderrolle für eine Spritz- oder Strahlwasser belastete Umgebung, insbesondere einer Förderrolle (1, 101, 201, 301) nach einem der vorhergehenden Ansprüche, umfassend
- Bereitstellen eines Rollenkörpers (10, 110, 210, 310) mit einem darin ausgebildeten Hohlraum und einer ersten Lagerwelle (21, 121, 221, 321) und zweiten Lagerwelle,
- Stoff- und kraftschlüssiges Verbinden eines Drehmomentübertragungselement (30, 130, 330) mit einer Außenoberfläche des Rollenkörpers, vorzugsweise durch
∘ Bereitstellen eines Drehmomentübertragungselements mit einem Innendurchmesser, der kleiner ist als ein Außendurchmesser des Rollenkörpers;
∘ Aufweiten des Drehmomentübertragungselements, beispielsweise durch Erwärmen;
∘ Aufbringen eines Klebstoffes auf eine Innenfläche des Drehmomentübertragungselements und/oder die Außenoberfläche des Rollenkörpers;
∘ Positionieren des Drehmomentübertragungselements auf dem Rollenkörper;
∘ Schrumpfen des Drehmomentübertagungselementes, beispielsweise durch Abkühlen,
- wobei im Hohlraum des Rollenkörpers (10, 110, 210, 310) eine elektrische Antriebseinheit mit einem Stator und einem Rotor angeordnet ist, wobei der Rotor und der Stator derart mit dem Rollenkörper und der ersten und zweiten Lagerwelle verbunden sind, dass eine Relativdrehung zwischen Rotor und Stator eine Relativdrehung zwischen dem Rollenkörper einerseits und der ersten und zweiten Lagerwelle andererseits bewirkt, und
- zwischen einer Innenfläche des Drehmomentübertragungselements (30, 130, 330) und der Außenoberfläche des Rollenkörpers (10, 110, 210, 310) ein Klebstoff angeordnet ist, **dadurch gekennzeichnet, dass** eine Außenfläche des Drehmomentübertragungselements mit Vorsprüngen und/oder Vertiefungen ausgebildet ist.

12. Verfahren nach dem vorherigen Anspruch, ferner umfassend
- Bilden einer axialen Stirnkappe (160, 260, 360) der Förderrolle durch Aufbringen und Aushärten einer Vergussmasse, die den Rollenkörper (10, 110, 210, 310) und das Drehmomentübertragungselement (30, 130, 330) und/oder die Motorkartusche (140, 240, 340) und/der ein am axialen Ende des Rollenkörpers angeordnetes Kopfelement (40) kontaktiert.

13. Verfahren nach dem vorherigen Anspruch,
**dadurch gekennzeichnet, dass** vor dem Aufbringen der Vergussmasse eine Schalung (50, 350) auf die Außenoberfläche des Rollenkörpers (10, 110, 210, 310) und/oder eine Außenoberfläche des Drehmomentübertragungselements (30, 130, 330) aufgebracht wird, die nach einem Aushärten der Vergussmasse wieder abgenommen wird.

## Claims

1. Conveyor roller (1, 101, 201, 301) for an environment loaded with cleaning fluid, such as, for example, spray water and/or jet water, comprising
- a roller body (10, 110, 210, 310) with a cavity formed therein,
- a first bearing shaft (21, 121, 221, 321) and a second bearing shaft,
- a torque transmission element (30, 130, 330) arranged on an outer surface of the roller body,
- wherein the torque transmission element is connected to the outer surface of the roller body in an integrally bonded and force-fitting manner;
the conveyor roller comprising an electric drive unit which is arranged in the cavity of the roller body (10, 110, 210, 310) and has a stator and a rotor, wherein the rotor and the stator are connected to the roller body and to the first and second bearing shaft in such a manner that a relative rotation between rotor and stator brings about a relative rotation between the roller body, on the one hand, and the first and second bearing shaft, on the other hand, wherein an adhesive is arranged between an inner surface of the torque transmission element (30, 130, 330) and the outer surface of the roller body (10, 110, 210, 310), **characterized in that** an outer surface of the torque transmission element is designed with projections and/or depressions.

2. Conveyor roller (1, 101, 201, 301) according to the preceding claim,
**characterized in that** the electric drive unit is designed as a motor cartridge (140, 240, 340).

3. Conveyor roller (1, 101, 201, 301) according to at least one of the preceding claims,
**characterized in that**
- the torque transmission element (30, 130, 330) protrudes beyond at least one end (11, 111, 211, 311) of the roller body (10, 110, 210, 310) in the axial direction, and/or
- the torque transmission element ends flush with at least one end of the roller body in the axial direction, and/or
- at least one end of the roller body protrudes beyond the torque transmission element in the axial direction.

4. Conveyor roller (1, 101, 201, 301) according to Claim 2, in particular according to Claim 3, **characterized in that**
- the motor cartridge (140, 240, 340) protrudes beyond at least one end (11, 111, 211, 311) of the roller body (10, 110, 210, 310) in the axial direction, and/or
- the motor cartridge ends flush with at least one end of the roller body in the axial direction, and/or
- at least one end of the roller body protrudes beyond the motor cartridge in the axial direction.

5. Conveyor roller (1, 101, 201, 301) according to at least one of the preceding claims,
**characterized in that** an axial end cap (160, 260, 360) of the conveyor roller is formed by a cured casting compound which is connected in an integrally bonded manner to the roller body (10, 110, 210, 310) and to the torque transmission element (30, 130, 330) and/or to the motor cartridge (140, 240, 340) and/or to a head element arranged at the axial end of the roller body.

6. Conveyor roller (1, 101, 201, 301) according to the preceding claim,
**characterized in that** the end cap (160, 260, 360) has an axially outwardly directed curvature (161, 261, 361) at the transition to the bearing shaft (21, 121, 221, 321).

7. Conveyor roller (1, 101, 201, 301) according to at least one of the preceding claims,
**characterized in that** the torque transmission element (30, 130, 330) is formed in two parts, wherein preferably an interface runs in the circumferential direction between a first and a second part of the torque transmission element.

8. Conveyor roller (1, 101, 201, 301) according to the preceding claim,
**characterized in that** the two parts of the torque transmission element (30, 130, 330) are connected to each other in a form-fitting, integrally bonded and/or force-fitting manner.

9. Conveyor roller (1, 101, 201, 301) according to at least one of the preceding claims,
**characterized in that** the torque transmission element (30, 130, 330) is formed from plastic or comprises plastic.

10. Conveyor roller (1, 101, 201, 301) according to at least one of the preceding claims,
**characterized in that** the torque transmission element (30, 130, 330), the casting compound and/or the adhesive are formed from the same material or comprise the same material.

11. Method for producing a conveyor roller for an environment loaded with spray water or jet water, in particular a conveyor roller (1, 101, 201, 301) according to one of the preceding claims, comprising
- providing a roller body (10, 110, 210, 310) with a cavity formed therein and with a first bearing shaft (21, 121, 221, 321) and second bearing shaft,
- connecting a torque transmission element (30, 130, 330) in an integrally bonded and force-fitting manner to an outer surface of the roller body, preferably by
∘ providing a torque transmission element with an inside diameter which is smaller than an outside diameter of the roller body;
∘ expanding the torque transmission element, for example by heating;
∘ applying an adhesive to an inner surface of the torque transmission element and/or to the outer surface of the roller body;
∘ positioning the torque transmission element on the roller body;
∘ shrinking the torque transmission element, for example by cooling,
- wherein an electric drive unit having a stator and a rotor is arranged in the cavity of the roller body (10, 110, 210, 310), wherein the rotor and the stator are connected to the roller body and to the first and second bearing shaft in such a manner that a relative rotation between rotor and stator brings about a relative rotation between the roller body, on the one hand, and the first and second bearing shaft, on the other hand, and
- an adhesive is arranged between an inner surface of the torque transmission element (30, 130, 330) and the outer surface of the roller body (10, 110, 210, 310), **characterized in that** an outer surface of the torque transmission element is designed with projections and/or depressions.

12. Method according to the preceding claim, furthermore comprising
- forming an axial end cap (160, 260, 360) of the conveyor roller by applying and curing a casting compound which makes contact with the roller body (10, 110, 210, 310) and with the torque transmission element (30, 130, 330) and/or with the motor cartridge (140, 240, 340) and/or with a head element (40) arranged at the axial end of the roller body.

13. Method according to the preceding claim, **characterized in that**, before the casting compound is applied, a shuttering (50, 350) is applied to the outer surface of the roller body (10, 110, 210, 310) and/or to an outer surface of the torque transmission element (30, 130, 330), said shuttering being removed again after the casting compound has cured.

## Revendications

1. Rouleau de transport (1, 101, 201, 301) pour un environnement chargé de fluide de nettoyage, par exemple de l'eau de pulvérisation et/ou de projection, comportant
- un corps de rouleau (10, 110, 210, 310) doté d'une cavité formée dans celui-ci,
- un premier arbre de palier (21, 121, 221, 321) et un deuxième arbre de palier,
- un élément de transmission de couple (30, 130, 330) disposé sur une surface extérieure du corps de rouleau,
- l'élément de transmission de couple étant relié par liaison de matière et/ou à force à la surface extérieure du corps de rouleau ;
le rouleau de transport comportant une unité d'entraînement électrique disposée dans la cavité du corps de rouleau (10, 110, 210, 310) et dotée d'un stator et d'un rotor, le rotor et le stator étant reliés au corps de rouleau et au premier et deuxième arbre de palier, de telle sorte qu'une rotation relative entre le rotor et le stator provoque une rotation relative entre le corps de rouleau d'une part et le premier et le deuxième arbre de palier d'autre part, un adhésif étant disposé entre une surface intérieure de l'élément de transmission de couple (30, 130, 330) et la surface extérieure du corps de rouleau (10, 110, 210, 310), **caractérisé en ce qu'**une surface extérieure de l'élément de transmission de couple est pourvue de saillies et/ou de renfoncements.

2. Rouleau de transport (1, 101, 201, 301) selon la revendication précédente,
**caractérisé en ce que** l'unité d'entraînement électrique est réalisée sous forme de cartouche de moteur (140, 240, 340).

3. Rouleau de transport (1, 101, 201, 301) selon au moins l'une des revendications précédentes,
**caractérisé en ce que**
- l'élément de transmission de couple (30, 130, 330) dépasse au-delà d'au moins une extrémité (11, 111, 211, 311) du corps de rouleau (10, 110, 210, 310) dans la direction axiale et/ou
- l'élément de transmission de couple se termine en affleurement avec au moins une extrémité du corps de rouleau dans la direction axiale, et/ou
- au moins une extrémité du corps de rouleau dépasse au-delà de l'élément de transmission de couple dans la direction axiale.

4. Rouleau de transport (1, 101, 201, 301) selon la revendication 2, en particulier selon la revendication 3,
**caractérisé en ce que**
- la cartouche de moteur (140, 240, 340) dépasse au-delà d'au moins une extrémité (11, 111, 211, 311) du corps de rouleau (10, 110, 210, 310) dans la direction axiale et/ou
- la cartouche de moteur se termine en affleurement avec au moins une extrémité du corps de rouleau dans la direction axiale, et/ou
- au moins une extrémité du corps de rouleau dépasse au-delà de la cartouche de moteur dans la direction axiale.

5. Rouleau de transport (1, 101, 201, 301) selon au moins l'une des revendications précédentes,
**caractérisé en ce qu'**un couvercle frontal axial (160, 260, 360) du rouleau de transport est formé par une masse de scellement durcie, qui est reliée par liaison de matière au corps de roulement (10, 110, 210, 310) et à l'élément de transmission de couple (30, 130, 330) et/ou à la cartouche de moteur (140, 240, 340) et/ou à un élément de tête disposé à l'extrémité axiale du corps de rouleau.

6. Rouleau de transport (1, 101, 201, 301) selon la revendication précédente,
**caractérisé en ce que** le couvercle frontal (160, 260, 360) présente un bombement (161, 261, 361) orienté axialement vers l'extérieur à la transition vers l'arbre de palier (21, 121, 221, 321).

7. Rouleau de transport (1, 101, 201, 301) selon au moins l'une des revendications précédentes,
**caractérisé en ce que** l'élément de transmission de couple (30, 130, 330) est réalisé en deux parties, une interface entre une première et une deuxième partie de l'élément de transmission de couple s'étendant de préférence dans la direction périphérique.

8. Rouleau de transport (1, 101, 201, 301) selon la revendication précédente,
**caractérisé en ce que** les deux parties de l'élément de transmission de couple (30, 130, 330) sont reliées l'une à l'autre par complémentarité de forme, par liaison de matière et/ou à force.

9. Rouleau de transport (1, 101, 201, 301) selon au moins l'une des revendications précédentes,
**caractérisé en ce que** l'élément de transmission de couple (30, 130, 330) est réalisé à partir de matière synthétique ou comprend une matière synthétique.

10. Rouleau de transport (1, 101, 201, 301) selon au moins l'une des revendications précédentes,
**caractérisé en ce que** l'élément de transmission de couple (30, 130, 330), la masse de scellement et/ou l'adhésif sont réalisés à partir du même matériau ou comprennent le même matériau.

11. Procédé de fabrication d'un rouleau de transport pour un environnement chargé d'eau de pulvérisation et/ou de projection, en particulier d'un rouleau de transport (1, 101, 201, 301) selon l'une des revendications précédentes, comportant
- la fourniture d'un corps de rouleau (10, 110, 210, 310) doté d'une cavité formée dans celui-ci et d'un premier arbre de palier (21, 121, 221, 321) et d'un deuxième arbre de palier,
- la liaison de matière et/ou à force d'un élément de transmission de couple (30, 130, 330) à une surface extérieure du corps de rouleau, de préférence par
∘ fourniture d'un élément de transmission de couple présentant un diamètre intérieur qui est inférieur à un diamètre extérieur du corps de rouleau ;
∘ élargissement de l'élément de transmission de couple, par exemple par chauffage ;
∘ application d'un adhésif sur une surface intérieure de l'élément de transmission de couple et/ou la surface extérieure du corps de rouleau ;
∘ positionnement de l'élément de transmission de couple sur le corps de rouleau ;
∘ contraction de l'élément de transmission de couple, par exemple par refroidissement,
- une unité d'entraînement électrique dotée d'un stator et d'un rotor étant disposée dans la cavité du corps de rouleau (10, 110, 210, 310), le rotor et le stator étant reliés au corps de rouleau et au premier et deuxième arbre de palier, de telle sorte qu'une rotation relative entre le rotor et le stator provoque une rotation relative entre le corps de rouleau d'une part et le premier et le deuxième arbre de palier d'autre part, et
- un adhésif étant disposé entre une surface intérieure de l'élément de transmission de couple (30, 130, 330) et la surface extérieure du corps de rouleau (10, 110, 210, 310), **caractérisé en ce qu'**une surface extérieure de l'élément de transmission de couple est pourvue de saillies et/ou de renfoncements.

12. Procédé selon la revendication précédente, comportant en outre
- la formation d'un couvercle frontal axial (160, 260, 360) du rouleau de transport par application et durcissement d'une masse de scellement qui est en contact avec le corps de rouleau (10, 110, 210, 310) et l'élément de transmission de couple (30, 130, 330) et/ou la cartouche de moteur (140, 240, 340) et/ou un élément de tête (40) disposé à l'extrémité axiale du corps de rouleau.

13. Procédé selon la revendication précédente,
**caractérisé en ce qu'**avant l'application de la masse de scellement, un coffrage (50, 350) est appliqué sur la surface extérieure du corps de rouleau (10, 110, 210, 310) et/ou une surface extérieure de l'élément de transmission de couple (30, 130, 330), lequel coffrage est à nouveau retiré après un durcissement de la masse de scellement.
